# EUROPEAN PATENT APPLICATION

(11) **EP 1 684 158 A1**
(43) Date of publication of application: **26.07.2006**
(21) Application number: 05001295.4
(22) Date of filing: 22.01.2005
(51) Int. Cl.: G06F 3/033, H04N 5/445

(54) **Module and method for controlling a portable multimedia audio and video recorder/player**

(71) Applicant: MobiNote Technology Corp., Jhonghe City, Taipei County 235 (TW)
(72) Inventor: Tung, Ning, Jhonghe City Taipei County 235 (TW)
(74) Representative: Helms, Joachim

(57) **Abstract**

The present invention discloses a module and method for controlling a portable multimedia audio and video recorder/player (10) which has an operating interface management program installed into the module for controlling audio and video recorder/player (10) and the operating interface management program displays certain operating function menus on a display module (108) of the recorder/player (10) and builds a scrolling component (70) into the recorder/player (10) as a basis for executing the foregoing operating function menus, and thus the portable audio and video recorder/player (10) can maximize its functions and operate independently under an environment without a computer system as well as simplifies the control buttons, so that users can control the recorder/player (10) by simple operations.

## Description

### BACKGROUND OF THE INVENTION

### Field of the Invention

The present invention relates to a portable multimedia audio and video recorder/player, more particularly to a module and a method for controlling a portable multimedia audio and video recorder/player.

### Description of the Related Art

As the portable audio and video recreation becomes more popular, the portable audio and video recorder/player usually comes with a thin, light, short and compact structure and integrates the functions of a music playback, a video playback, a digital photo album, a digital audio recording and a digital video recording, etc to create a new mobile audio/video application mode and satisfy the personal portable digital audio and video requirements. Such portable audio and video recorder/player has become a very popular electronic consumer product now.

However, some of the functions (such as a digital recording of a television program) of the foregoing portable audio and video recorder/player still have to be connected with a computer system and controlled indirectly by computer software, and the operating modules of many computer software or audio and video player are very professional or too complicated and discourage users from using the portable audio and video recorder/player, or having problem of using it without some training.

### Summary of the Invention

Therefore, it is a primary objective of the present invention to provide a portable audio and video recorder/player that can maximize its functions and operate independently under the environment without a computer system and allow users to control the audio and video recorder/player with simple operations.

To achieve the foregoing objective, an operating interface management program is installed into the module for controlling audio and video recorder/player in accordance with the present invention, and the operating interface management program shows certain operating function menus on a display module of the recorder/player, and builds a scrolling component into the recorder/player as a basis for executing the foregoing operating function menus. The foregoing operating function menu comprises a main menu and a plurality of submenus for the functional options attached to the main menu; the foregoing scrolling component comprises a knob and a movement sensing system, and the knob is fixed into an opening on a side of the housing of a recorder/player and capable of rotating about the vertical axis of the opening and moving along the horizontal axis of the opening; the foregoing movement sensing system senses the extent of turning of the knob and determines whether or not a transversal movement is taken place, and reflects the detected result to the functional options of the main menu as to select one of the functional options.

The present invention allows a portable audio and video recorder/player to maximize its functions and operate independently under the environment without a computer system, and also simplifies the control and operation of the press buttons, such that users can control the recorder/player with simple operations.

### BRIEF DESCRIPTION OF THE DRAWINGS

FIG 1 is a view of the control module and the control flow chart according to the present invention.
FIG. 2A is a front view of the audio and video recorder/player and the screen of the main menu according to the present invention.
FIG 2B is a front view with a submenu on the screen according to the present invention.
FIG 2C is a left side view of the audio and video recorder/player according to the present invention.
FIG 2D is a right side view of the audio and video recorder/player according to the present invention.
FIG 2E is a top view of the audio and video recorder/player according to the present invention.
FIG 3 is a view of the modes indicated in the main menu according to the present invention.
FIG 4 is a schematic view of controlling the execution of the audio and video playback function according to the present invention.
FIG 5 is a schematic view of controlling the execution of the music playback function according to the present invention.
FIG 6 is a schematic view of controlling the execution of the digital photo album functions according to the present invention.
FIG 7A is a schematic view of controlling the execution of the digital audio recording function according to the present invention.
FIG 7B is another schematic view of controlling the execution of the digital audio recorded file playback and function according to the present invention.
FIG 8A is a schematic view of controlling the execution of the digital video recording function according to the present invention.
FIG 8B is another schematic view of controlling the execution of the digital video recorded file and playback function according to the present invention.
FIG 9 is a schematic view of controlling the execution of the setup and adjustment function according to the present invention.

### DETAILED DESCRIPTION OF THE PREFERRED EMBODIMENTS

To make it easier for our examiner to understand the objective of the invention, its structure, innovative features, and performance, we use a preferred embodiment together with the attached drawings for the detailed description of the invention.

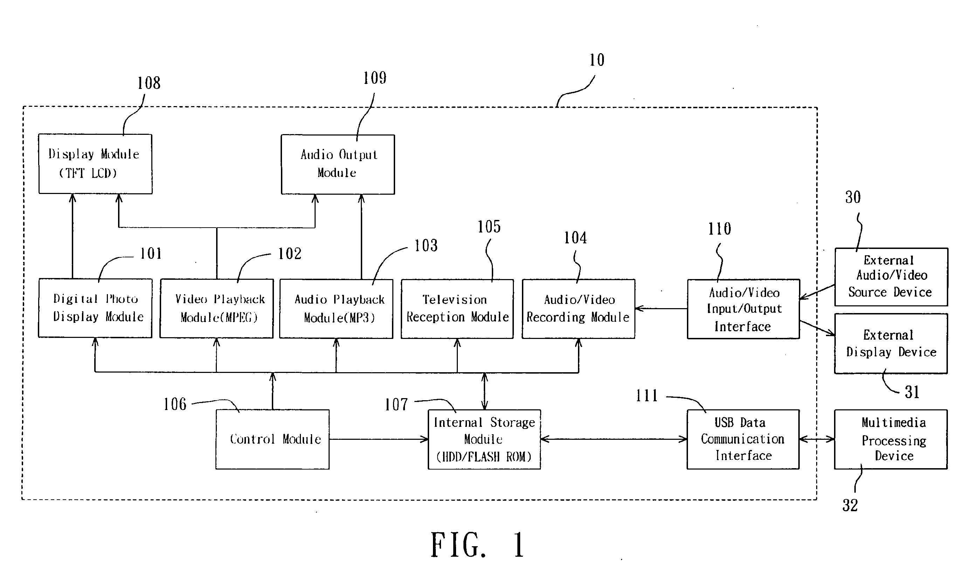

Please refer to FIG 1 for a portable audio and video recorder/player 10 in accordance with the present invention, which comprises the following modules:
a digital photo display module 101 capable of providing a digital photo display function;
a MPEG compatible video playback module 102 capable of providing a video playback function;
a MP3 compatible audio playback module 103 capable of providing an audio playback function;
an audio/video recording module 104 capable of providing a video and an audio recording functions;
a television reception module 105 capable of providing a television reception function;
a control module 106 capable of controlling the digital photo display module 101, the MPEG video playback module 102, the MP3 compatible audio playback module 103, the audio/video recording module 104 and the television reception module 105 for executing the required digital photo browsing function, video playback function, audio playback function, audio/video recording function, or television reception function;
an internal storage module 107 capable of storing the digital photo file processed by the digital JPEG photo display module, the digital video file processed by the MPEG video playback module, the digital audio file processed by the digital MP3 audio playback module and the digital audio/video file processed by the digital audio/video recording module;
a display module 108 capable of displaying a digital photo or a digital video image processed by the digital photo display module 101, the video playback module 102, or the television reception module 105, and the display module 108 is a thin film transistor liquid crystal display (TFT LCD) module;
an audio output module 109 for outputting a audio/video signal processed by the audio/video playback module 102, the audio playback module 103 and the television reception module 105;
an audio/video input/output interface 110, being connected to an external audio/video source device 30 or an external display device 31 as to input an audio/video signal from the external audio/video source device 30 or output an audio/video signal to the external display device 31; and
a universal serial bus (USB) data communication interface 111 for externally connecting to one or more sets of multimedia processing host devices 32 to expand the multimedia processing functions.

The present invention is designed according to the aforementioned control modules, such that a portable multimedia audio and video recorder/player 10 can maximize its function and operates independently in an environment without a computer system and simplifies the operating press buttons to let users control the recorder/player with simple operations.

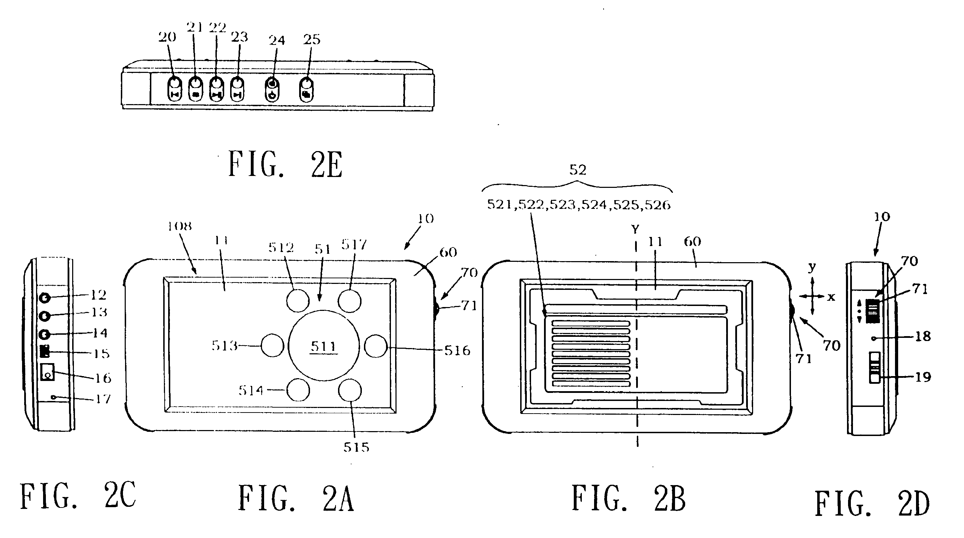

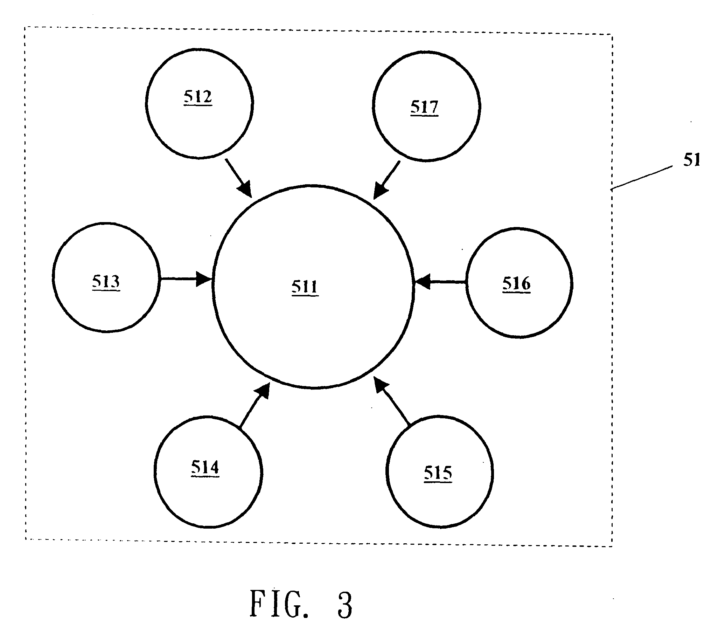

Please refer to FIGS. 2A, 2B, 2D and 3, the control modules of the present invention include:
an operating interface management software being installed in the internal storage module 107 and displaying some operating function menus on the display module 108; and
a scroll component 70 being built in the housing 60 of the portable multimedia recorder/player and serving as a basis for executing the foregoing operating function menu.

The foregoing operating function menu further comprises a main menu 51 and a plurality of submenus 52 for each functional option attached to the main menu 51.

In FIGS. 2A and 3, the main menu 51 displayed on the display module 108 includes a circular display area 511 and a plurality of functional options 512, 513, 514, 515, 516, 517. The circular display area 511 is a circular block and the functional options 512~517 are arranged along the circumference of the circular display area 511. The functional options 512~517 include a video playback 512, a music playback 513, a digital photo album 514, a digital audio recording 515, a digital audio/video recording 516, and a setup 517 (such as the brightness of the LCD screen, the timing of backlight illumination, the timing of automatically turning on/off the power, the television output standard, the video recording quality, the audio recording quality, the automatic playback setup, the system default setting, the system date, and the system time, etc). Each functional option corresponds to one of the foregoing functional modules to control one of the modules to execute the corresponding function.

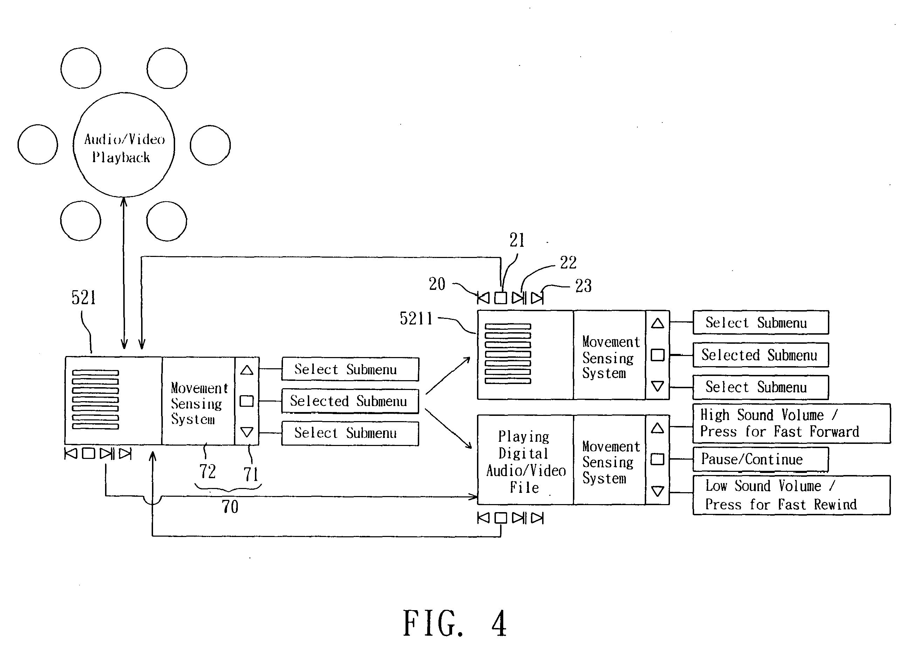

In FIGS. 2D and 4, the scroll component 70 includes a knob 71 and a movement sensing system 72, and the knob is fixed into a predetermined opening on a side of the housing 60 and can be turned upward or downward in the direction indicated by the arrow y in the opening and moving outward in the direction indicated by the arrow x in FIGS 2B.

The movement sensing system senses the extent of the upward or downward turning and reflects the result to the functional options 512~517 of the main menu 51 as to select one of the functional options. The selected functional option will be displayed in a rotational symbol mode and in the circular display area 511, so that a user can see the desired selected function easily and clearly for entering the corresponding functional option into the functional submenus 521, 522, 533, 524, 525, 526.

In FIGS. 2B and 4 to 9, the plurality of functional options of the functional submenus 521, 522, 533, 524, 525, 526 are arranged with an interval between them and parallel to the vertical axis Y of the display module 108, and the knob 71 is turned upward or downward and the extend of turning upward or downward is reflected to the submenus, such that one of the options will be selected and the selected option will be displayed in rotational symbol. The horizontal outward movement of the knob 71 is reflected to the selected functional option for being entered into the corresponding submenu 5211, 5221, 5241, 5251, 5261 to execute the corresponding function or play the multimedia file or return to the previous menu of the options depending on the cursor's position.

In FIG. 4, while the user is operating in the submenu of the video playback 512, turning the knob 71 upward or downward allows a user to select a functional option in the submenu 521, 5211; and pressing the knob 71 inward allows the user to select a functional option. After a functional option is selected and enters into a playback mode, turning the knob 71 upward or downward further provides the function of adjusting the sound volume; simultaneously turning the knob 71 inward and upward/downward gives the fast forward or fast backward function; and pressing the knob 71 inward provides a toggle between the pause and continue functions.

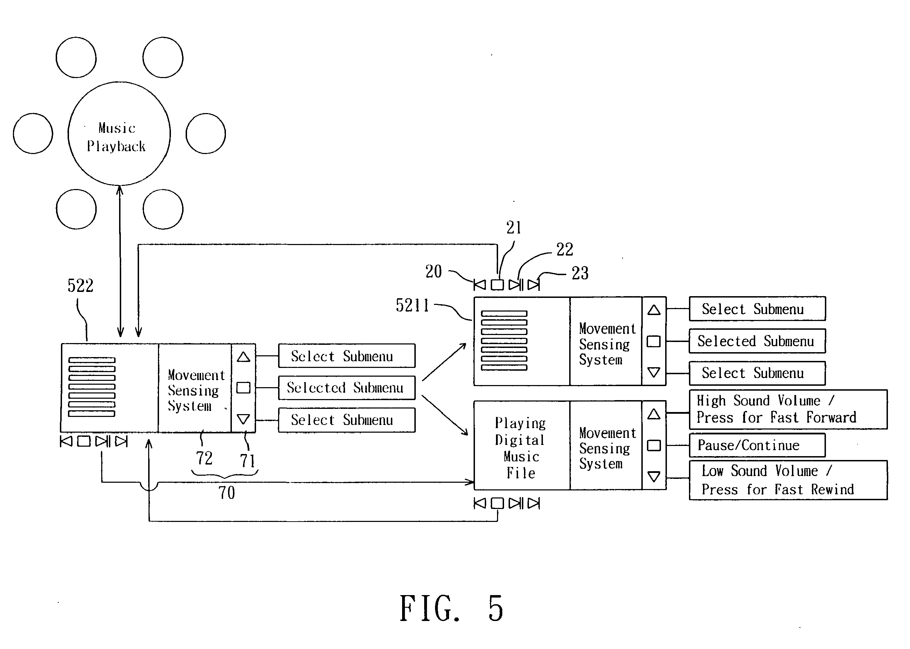

In FIG 5, while the user is operating in the submenu of the music playback 513, turning the knob 71 upward or downward can select a functional option in the submenu 522, 5221 and pressing the knob 71 inward can select a functional option. After a functional option is selected and enters into a playback mode, turning the knob 71 upward or downward further provides the function of adjusting the sound volume; simultaneously turning the knob 71 inward; and pressing the knob 71 inward provides a toggle between the pause and continue functions.

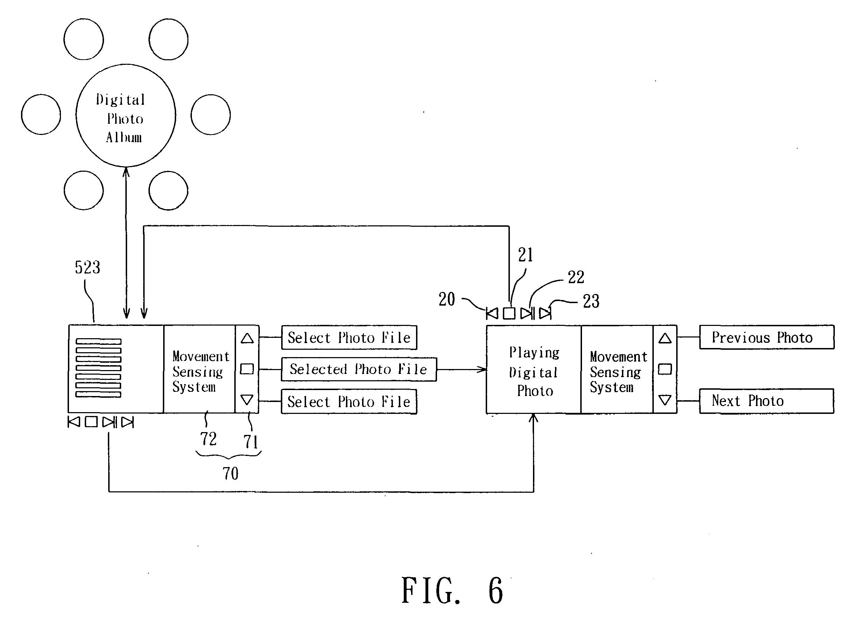

In FIG. 6, while the user is operating in the submenu of the digital photo album 514, turning the knob 71 upward or downward can select a photo file in the submenu 523 and pressing the knob 71 inward can select a photo file. After a photo file is selected and enters into a photo playback mode, turning the knob 71 upward or downward further provides the function of volume adjustment.

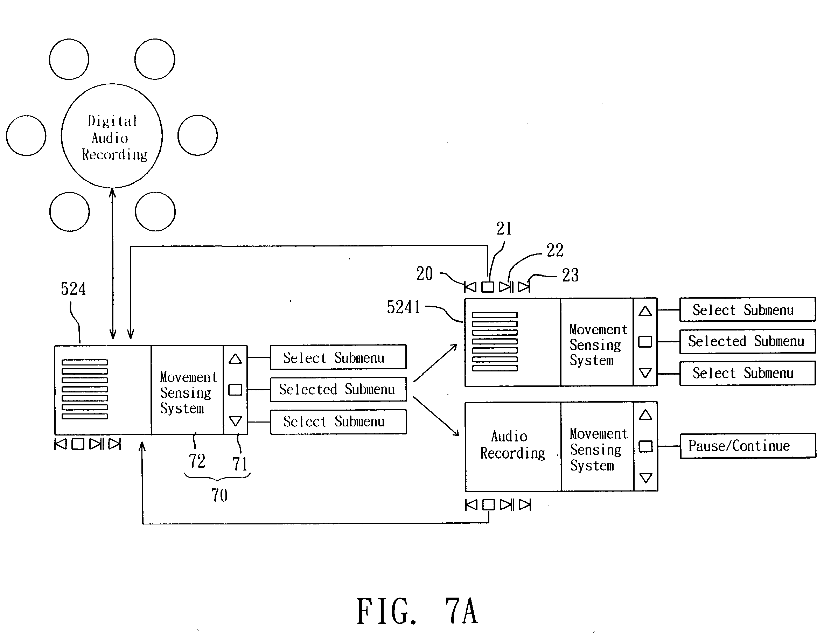

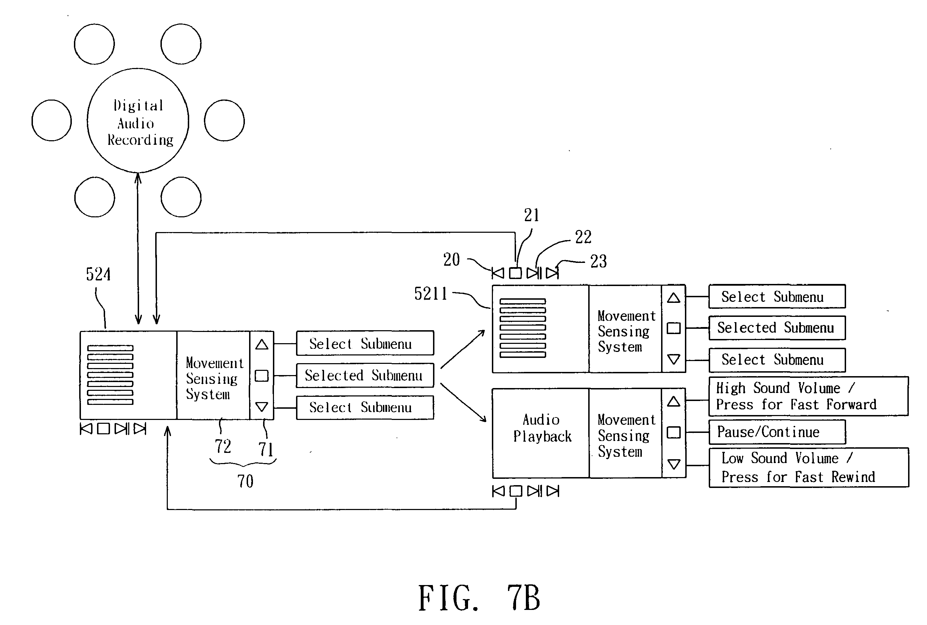

In FIGS. 7A and 7B, while the user is operating in the submenu of the digital audio recording 515, turning the knob 71 upward or downward can select the functional options in the submenu 524, 5241, and pressing the knob 71 inward can select a functional option. After a functional option is selected and enters into an audio recording mode, pressing the knob 71 inward provides the toggle between the pause and continue functions. When the audio recording is completed and ready for playing the recorded sound, turning the knob 71 upward or downward further provides the function of adjusting the sound volume; simultaneously turning the knob 71 inward and upward/downward gives the fast forward or fast reverse function; and pressing the knob 71 inward provides a toggle between the pause and continue functions.

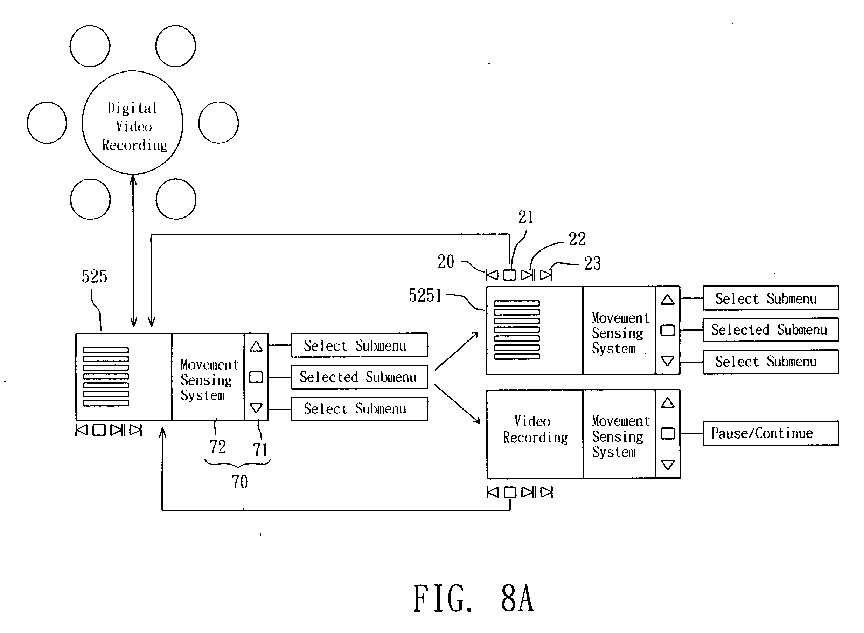

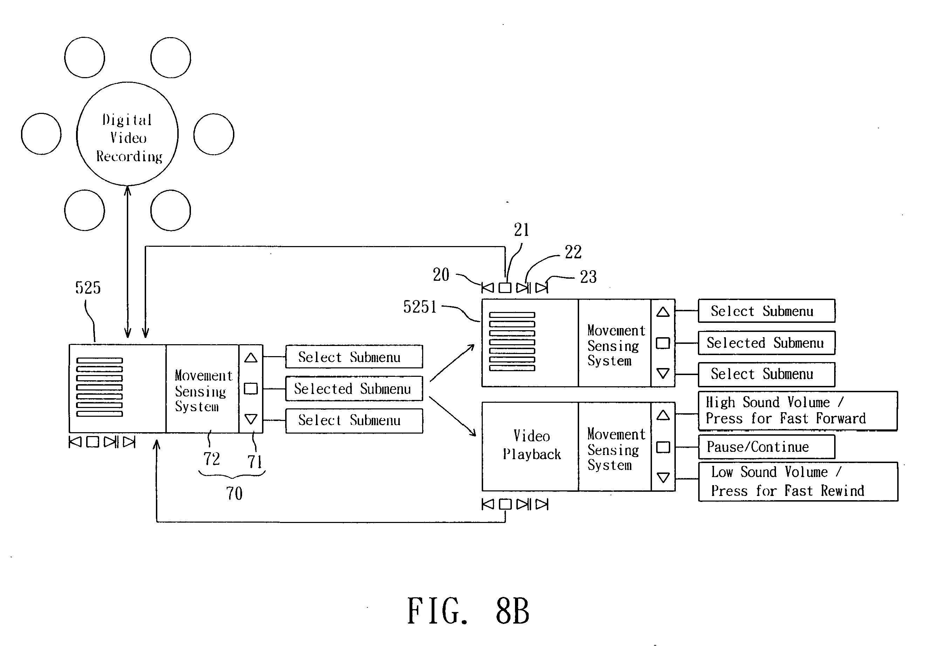

In FIGS. 8A and 8B, while the user is operating in the submenu of the digital video recording 516, turning the knob 71 upward or downward can select the functional options in the submenu 525, 5251, and pressing the knob 71 inward can select a functional option. After a functional option is selected and enters into a video recording mode, pressing the knob 71 inward provides a toggle between the pause and continue functions. When the video recording is completed and ready for playing the recorded video, turning the knob 71 upward or downward further provides the function of adjusting the sound volume; and pressing the knob 71 inward provides a toggle between the pause and continue functions.

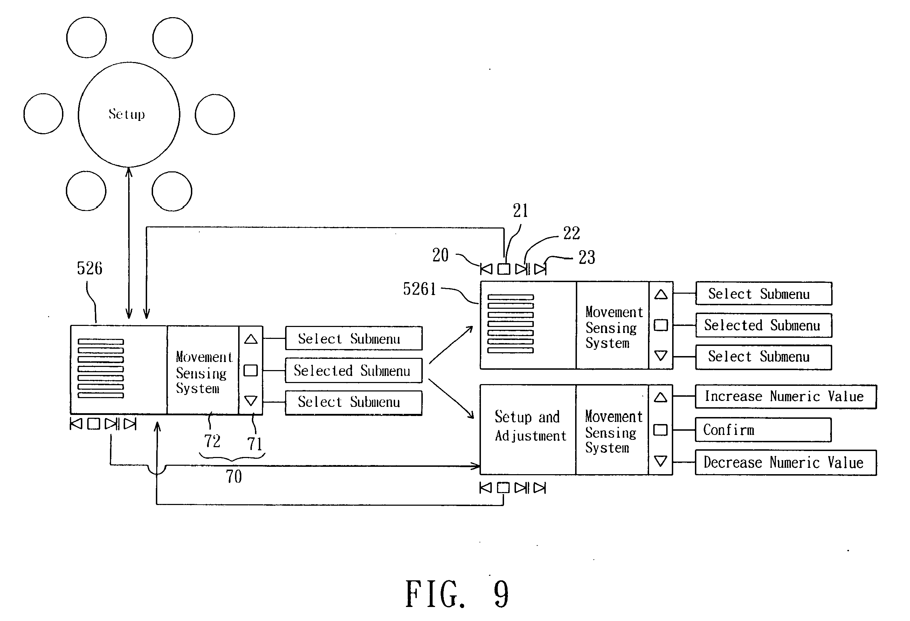

In FIG 9, while the user is operating in the menu of setup 517, turning the knob 71 upward or downward can select a function in the submenu 526, 5261 and pressing the knob 71 inward can select a functional option.

In FIGS. 2A~2E, the external look of the multimedia recorder/player according to the present invention and a display screen 11 are shown.

On the left side of the recorder/player 10, the following are provided:
an audio/video input terminal slot 12 for receiving the signal input line for the connection of the recorder/player 10 with an audio/video equipment such as a television, a video recorder/player or a digital camera;
an audio/video output terminal slot 13 for receiving the signal output for the connection of the recorder/player 10 with an equipment such as a television or a stereo;
an earphone jack 14;
a universal serial bus (USB) port 15 for connecting a USB cable for the connection of the recorder/player 10 to the USB host device;
a power connector slot 16 for receiving a cable of a power adapter for charging a battery inside the recorder/player 10; and
a microphone receptor hole 17 for digital audio recording.

On the right side of the recorder/player 10, the following are provided:
a knob 71, having the functions as described above;
a reset button 18 for resetting the setting to the factory default setting by pressing this button with a tiny needle thru the hole, when a function of the recorder/player 10 is locked or cannot work properly; and
a key lock button 19 for disabling the functions of all function keys by pulling down this slide switch.

At the top of the recorder/player 10, the following are provided:
a rewind button 20 for jumping to the previous file by pressing this button once while playing a file;
a stop button 21 for stopping the playback and returning to the previous menu by pressing this button while playing a file;
a play/pause button 22 for playing a file or pausing the playback by pressing this button while playing a file;
a forward button 23, for jumping to the next file by pressing this button once while playing a file;
a power on/off button 24 for turning on or off the power of the recorder/player by pressing this button; and
a display mode button 25 for switching the display mode to an audio/video output mode by pressing this button when the audio/video output is connected to other video equipment and displaying the screen of the recorder/player on the connected video equipment, and such screen includes a user interface and a multimedia content.

In the control method and mode as shown in FIGS. 4 to 9, the reverse button 20, the stop button 21, the play/pause button 22 and the forward button 23 can fully play their functions.

While the invention has been described by way of example and in terms of a preferred embodiment, it is to be understood that the invention is not limited thereto. To the contrary, it is intended to cover various modifications and similar arrangements and procedures, and the scope of the appended claims therefore should be accorded the broadest interpretation so as to encompass all such modifications and similar arrangements and procedures.

## Claims

1. A module for controlling a portable multimedia audio and video recorder/player, and said recorder/player comprising a digital photo display module, a video playback module, an audio playback module, an audio/video recording module, a television reception module, a control module, an internal/external storage module, a display module, an audio output module, an audio/video input/output interface, and a data communication interface and said control module comprising:
an operating interface management software, being installed in said internal storage module and displaying a plurality of operating function menus on said display module;
a scrolling component, being built in said recorder/player and acting as a basis for executing said operating function menu;
said operating function menu comprising a main menu and a plurality of submenus for each functional option attached to said main menu;
said scrolling component comprising a knob and a movement sensing system, and
said knob being fixed into an opening disposed on a side of a housing of said recorder/player and capable of turning along a turnable plane and moving transversally on to the plane parallel to said turnable plane; and
said movement sensing system sensing the turning of said knob and determining its transversal movement, and then reflecting a detected result to said functional option of said main menu as to select one of said functional options.

2. The module for controlling a portable multimedia audio and video recorder/player of claim 1, wherein said main menu displays a circular display area and a plurality of functional options on said display module and the selected functional option is in a rotational symbol and displayed in said circular display area.

3. The module for controlling a portable multimedia audio and video recorder/player of claim 2, wherein said circular display area is a circular block and said plurality of functional options are arranged along the circumference of said circular display area.

4. The module for controlling a portable multimedia audio and video recorder/player of claim 3, wherein said functional options include an audio/video playback, a music playback, a digital photo album, a digital audio recording, a digital video recording and a setup.

5. The module for controlling a portable multimedia audio and video recorder/player of claim 1, wherein said knob controls pausing or continuing the execution of a multimedia file while said recorder/player is playing said multimedia file.

6. The module for controlling a portable multimedia audio and video recorder/player of claim 1, wherein said knob controls a sound volume while said recorder/player is playing a multimedia file.

7. The module for controlling a portable multimedia audio and video recorder/player of claim 1, wherein said knob controls a playback speed while said recorder/player is playing a multimedia file.

8. A method for controlling a portable multimedia audio and video recorder/player, having a plurality of operation function menus created and stored in an internal storage of said recorder/player, and said operating function menus being disposed on a display module of said recorder/player; said recorder/player having a housing and a knob being turnable with respect to said housing; and said control method comprising the steps of:
(a) rotating said knob along a turnable plane of said knob;
(b) reflecting an operating function menu on said display mode and setting a selected operating function into a rotational symbol mode;
(c) moving said knob transversally on a plane parallel to said turnable plane of said knob; and
(d) reflecting to said operating function in rotational symbol and displaying the corresponding result of said operating function corresponding to the execution of said corresponding submenu or said recorder/player on said display module.

9. The method for controlling a portable multimedia audio and video recorder/player of claim 8, wherein said knob turns along said turnable plane for controlling the execution result of said recorder/player when said recorder/player executes the corresponding result of said operating function of said recorder/player in step (d).

10. The method for controlling a portable multimedia audio and video recorder/player of claim 8, wherein said knob turning along said turnable plane further comprises the step of applying a transversal force on said knob whiling turning said knob.

11. The method for controlling a portable multimedia audio and video recorder/player of claim 8, wherein said knob moves transversally along a plane parallel to said turnable plane for controlling the execution result of said recorder/player when said recorder/player executes the corresponding result of said operating function of said recorder/player in step (d).

12. A method for controlling a portable multimedia audio and video recorder/player, comprising an operating interface management software installed in an internal storage module of said recorder/player, and said operating interface management software displaying a plurality of operating function menus on said display module; and a knob and a movement sensing system being built on said recorder/player as a basis for executing said operating function menu, and said control method comprising the steps of:
(a) displaying a main menu on said display module, and said main menu comprising a circular display area and a plurality of functional options being arranged along the circumference of said circular display area;
(b) turning said knob along a turnable plane of said knob;
(c) reflecting said main menu to said display module and setting a selected functional option into a rotational symbol mode and displaying said selected function option in said circular display area;
(d) moving said knob transversally along a plane parallel to said turnable plane of said knob; and
(e) reflecting said functional option in rotational symbol and displaying the corresponding submenu of said functional option on said display module.

13. The method for controlling a portable multimedia audio and video recorder/player of claim 12, wherein step (d) further comprises the step of said recorder/player executing the corresponding result of said operation function.

14. The method for controlling a portable multimedia audio and video recorder/player of claim 13, wherein said knob is turned along said turnable plane for controlling the execution result of said recorder/player when said recorder/player executes the corresponding result of said operating function.

15. The method for controlling a portable multimedia audio and video recorder/player of claim 13, wherein said knob being turned along said turnable plane further comprises the step of applying a transversal force on said knob while turning said knob.

16. The method for controlling a portable multimedia audio and video recorder/player of claim 13, wherein said knob is moved transversally on a plane parallel to said turnable plane for controlling the execution result of said recorder/player when said recorder/player executes the corresponding result of said operating function.
